# FASCICULE DE BREVET EUROPEEN

(11) **EP 3 209 458 B1**
(45) Date de publication et mention de la délivrance du brevet: **13.07.2022**
(21) Numéro de dépôt: 15791697.4
(22) Date de dépôt: 20.10.2015
(51) Int. Cl.: B23Q 1/34, B23B 47/34, B23Q 5/32, B23Q 5/40

(54) **DISPOSITIF D'USINAGE VIBRATOIRE AMELIORE**
VERBESSERTE VIBRATIONSBEARBEITUNGSVORRICHTUNG
IMPROVED VIBRATORY MACHINING DEVICE

(30) Priorité: 22.10.2014 FR 1460174
(43) Date de publication de la demande: 30.08.2017
(73) Titulaire: Centre Technique Des Industries Mecaniques, 60300 Senlis (FR); AMVALOR, 75013 Paris (FR)
(72) Inventeur: MASCIANTONIO, Ugo, F-59267 Proville (FR); MORARU, George, F-13100 Aix-en-Provence (FR)
(74) Mandataire: Fédit-Loriot
(86) Numéro de dépôt international: PCT/FR2015/052818
(87) Numéro de publication internationale: WO 2016/062964

(56) Documents cités:
- EP-A1- 1 916 045
- WO-A1-2013/088343
- FR-A1- 2 944 722
- FR-A1- 2 952 563
- US-A- 5 342 152
- US-A1- 2007 209 813
- US-A1- 2011 222 975

## Description

La présente invention concerne le domaine des dispositifs d'usinage de pièces, tel que les dispositifs de perçage et, plus particulièrement ceux intégrant un mouvement d'avance de l'outil coupant, par exemple du foret.

Un tel dispositif est bien connu de l'homme du métier, notamment par l'exemple qu'en donne le document de brevet FR 2 907 695, qui décrit une machine, qu'on appelle unité de perçage, comportant un mécanisme d'entraînement muni d'un pignon d'entraînement monté solidaire en rotation sur une broche porte-outil pour entraîner en rotation cette dernière, tout en lui autorisant un mouvement axial, et d'un pignon d'avance couplé à la broche porte outil par une liaison hélicoïdale pour entraîner la broche en translation le long de son axe, dans un mouvement d'avance, en fonction de la vitesse relative de rotation des pignons d'entraînement et d'avance.

Le document FR 2 952 563 A1 décrit un dispositif selon le préambule de la revendication 1.

A la différence des machines à commande numériques ou autres moyens de perçage utilisant des moteurs électriques, les unités de perçage ne possèdent généralement qu'un moteur (pneumatique ou électrique), qui assure, via le mécanisme d'entraînement, la mise en rotation de l'outil autour de son axe et simultanément son avance ou son recul par translation le long de son axe. Les entraînements en translation et en rotation étant mécaniquement liés, les paramètres opératoires des unités de perçage sont figés par le choix des pignons et constants tout au long du cycle de perçage. En particulier, le rapport entre la vitesse de rotation et la vitesse d'avance est imposé cinématiquement, donnant ainsi une avance par tour constante, qui ne peut donc être adaptée de façon optimale en fonction des matériaux percés. Ainsi, si une telle machine s'avère généralement satisfaisante, son utilisation pour percer des alésages profonds et / ou des empilages multi-matériaux peut s'avérer délicate.

En effet, dans ce contexte, l'évacuation des copeaux formés lors du perçage peut s'avérer difficile. Le bourrage des copeaux peut provoquer la casse ou une usure prononcée de l'outil de perçage, la dégradation de l'état des surfaces générées, plus particulièrement lors des opérations de perçage d'empilements de matériaux différents, ou une baisse importante de la productivité, notamment par la limitation imposée de paramètres de coupe comme la vitesse de rotation ou la vitesse d'avance.

Un remède à cet inconvénient consiste à provoquer la fragmentation de ces copeaux par variation de leur épaisseur, grâce à un perçage discontinu. Aussi, la machine de perçage décrite dans le document de brevet précité estelle munie d'un système de déplacement du pignon d'avance par rapport au bâti de la machine, se présentant sous la forme d'un ensemble de came/suiveur de came, un premier de ces éléments étant solidaire en rotation de la broche et l'autre étant solidaire en rotation du pignon d'avance, permettant de superposer une oscillation au mouvement d'avance de la broche le long de son axe lors du perçage. Ainsi, lors de l'avance de l'outil de perçage, ces oscillations axiales font varier l'épaisseur des copeaux, permettant de ce fait leur fragmentation et leur évacuation. Il en résulte toutefois un frottement au niveau de la came, qui génère un échauffement, de l'usure et du bruit. En outre, la fréquence des oscillations est fonction de la vitesse relative de rotation entre le pignon d'avance et la broche porte-outil et ne permet pas toujours d'obtenir les fréquences d'oscillation optimales pour une bonne fragmentation des copeaux, car le nombre d'oscillations par tour reste constant. Par conséquent, une telle machine ne pourra pas s'adapter à des configurations d'usinage multiples, par exemple au perçage avec des forets à deux arêtes ou à une seule arête, pour lesquelles les nombres d'oscillations par tour doivent être différents. En outre, les architectures proposées par le brevet suscité ne permettent pas de pouvoir commander un arrêt de la mise en oscillations en fonction des particularités du processus d'usinage. Or, un tel arrêt peut être rendu nécessaire, par exemple si le même outil doit réaliser un perçage suivi par la réalisation d'un chanfrein, ce dernier nécessitant un mouvement d'avance sans oscillations superposées. D'autres optimisations de l'assistance vibratoire à la fragmentation des copeaux sont également impossibles avec des principes connus, comme par exemple la variation en temps réel, pendant l'opération de perçage, de l'amplitude ou de la fréquence des oscillations imposées, ou la génération de formes d'oscillations différentes d'une sinusoïde, comme par exemple une forme d'oscillation en dents de scie.

Aussi, un but de la présente invention est de proposer un dispositif d'usinage amélioré, notamment un dispositif de perçage permettant une fragmentation des copeaux lors du perçage par superposition d'oscillations axiales au mouvement d'avance de l'outil, qui soit exempt de l'une au moins des limitations précédemment évoquées et, en particulier, qui soit simple à mettre en oeuvre, peu encombrant et dont les caractéristiques d'oscillation sont aisément adaptables.

A cet effet, la présente invention a pour objet un dispositif d'usinage comprenant un bâti, un arbre de transmission s'étendant le long d'un axe et apte à être couplé à un outil coupant, et un mécanisme d'entraînement de l'arbre de transmission, ledit mécanisme comprenant un organe de rotation couplé à l'arbre de transmission et apte à entraîner en rotation l'arbre de transmission autour de son axe par rapport au bâti, un organe d'entraînement en liaison hélicoïdale avec l'arbre de transmission et apte à entraîner en translation l'arbre de transmission le long de son axe par rapport au bâti selon un mouvement d'avance, en fonction de la vitesse relative de rotation desdits organes de rotation et d'entraînement, et des moyens de génération d'oscillations axiales aptes à générer un mouvement d'avance oscillant de l'arbre de transmission le long de son axe.

Selon l'invention, ledit organe d'entraînement est monté mobile en translation par rapport audit bâti le long de l'axe et est disposé entre une extrémité de couplage de l'arbre de transmission avec ledit outil coupant et ledit organe de rotation, lesdits moyens de génération d'oscillations axiales comprenant un actionneur électromécanique monté en repère fixe, lié audit bâti, à l'avant dudit organe d'entraînement, avec lequel ledit actionneur électromécanique est apte à être couplé pour le faire osciller en translation, de manière à superposer une composante d'oscillation axiale audit mouvement d'avance.

Selon d'autres caractéristiques avantageuses du dispositif d'usinage conforme à l'invention, prises isolément ou en combinaison :
- ledit actionneur électromécanique peut être agencé de manière à générer un mouvement de déplacement axial dudit organe d'entraînement dans une direction axiale opposée à la direction du mouvement d'avance, tandis qu'un ressort de précharge sollicite ledit organe d'entraînement dans une direction axiale correspondant à la direction du mouvement d'avance ;
- ledit actionneur électromécanique peut être agencé, en variante, de manière à générer un mouvement de déplacement axial dudit organe d'entraînement dans une direction axiale correspondant à la direction dudit mouvement d'avance, tandis qu'un ressort de précharge sollicite ledit organe d'entraînement dans une direction axiale opposée à la direction du mouvement d'avance;

- ledit mouvement de déplacement axial peut être avantageusement transmis audit organe d'entraînement par l'intermédiaire d'un moyen d'amplification mécanique apte à amplifier l'amplitude du mouvement généré par ledit actionneur électromécanique ;
- ledit moyen d'amplification mécanique peut comprendre, selon un exemple de réalisation, un bras de levier s'étendant entre une extrémité libre dudit actionneur électromécanique et ledit organe d'entraînement ;
- le dispositif comprend préférentiellement un moyen d'accouplement avec ledit organe d'entraînement de type butée à double effet solidaire dudit organe d'entraînement ;
- ledit actionneur électromécanique est en appui par une de ses extrémités sur une butée annulaire d'appui axial fixée audit bâti ;
- ladite butée annulaire d'appui axial peut avantageusement comprendre des moyens élastiques d'amortissement par l'intermédiaire desquels ladite extrémité dudit actionneur électromécanique est en appui sur ladite butée annulaire d'appui axial ;
- ledit organe d'entraînement est en liaison glissière dans la direction de l'axe avec une roue d'entraînement en rotation dudit organe d'entraînement, ladite roue d'entraînement recevant un mouvement de rotation et étant en liaison pivot par rapport audit bâti ;
- ladite liaison glissière entre ledit organe d'entraînement et ladite roue d'entraînement dans la direction de l'axe est réalisée par des moyens de guidage élastiques ;
- ledit dispositif peut comprendre un pivot glissant entre ledit organe d'entraînement et ledit bâti ;
- ledit actionneur électromécanique peut être un actionneur piézoélectrique ou magnétostrictif ou électrostrictif.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est un schéma illustrant la cinématique d'un mécanisme d'entrainement d'une unité de perçage dit à avance programmée, auquel l'invention peut être appliquée, non limitativement ;
- la Figure 2 est un schéma illustrant un mode de réalisation de l'invention ;
- la Figure 3 est un schéma illustrant un autre mode de réalisation de l'invention ;
- la Figure 4 est un schéma illustrant encore un autre mode de réalisation de l'invention.

A cet égard, sur les figures, il est noté que les éléments portant les mêmes références numériques correspondent à des éléments identiques ou similaires.

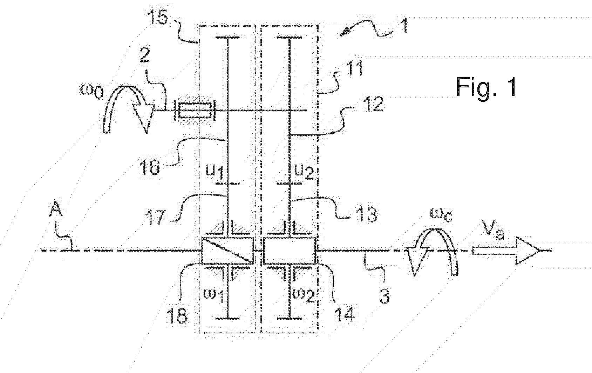

La figure 1, illustre une structure cinématique classique d'un dispositif de perçage présentant un mécanisme d'entraînement 1 constituant un mécanisme d'entraînement dit à avance programmée, reliant mécaniquement un arbre de transmission d'entrée 2 à un arbre de transmission de sortie 3, auquel est destiné à être couplé un outil coupant, en l'occurrence un outil de perçage. L'arbre 2 du mécanisme d'entraînement est accouplé à un moteur d'entraînement ou à un ensemble moteur / réducteur. L'ensemble de ces éléments est au moins partiellement logé dans un bâti du dispositif de perçage et l'arbre de transmission de sortie 3 est reçu dans le bâti de manière mobile en rotation autour de son axe A et en translation le long de cet axe A.

Selon l'exemple de réalisation de la figure 1, le mécanisme d'entraînement 1 comprend un premier moyen d'engrenage 11, qui permet de transformer le mouvement de rotation de l'arbre d'entrée 2 en un mouvement de rotation de l'arbre de sortie 3. Ce premier moyen d'engrenage comporte par exemple une première roue d'entraînement 12 fixée sur l'arbre d'entrée 2 engrenant sur un organe de rotation 13 couplé à l'arbre de sortie 3, de façon à ce que l'organe de rotation 13 tourne avec l'arbre de sortie 3 tout en autorisant un déplacement en translation de celui-ci le long de son axe A par rapport à l'organe de rotation 13, la liaison entre l'organe de rotation 13 et l'arbre de transmission de sortie 3 étant par exemple une liaison glissière 14, l'arbre de transmission de sortie 3 pouvant comporter des cannelures dans lesquelles s'engagent des nervures correspondantes de l'organe de rotation 13.

Conformément aux mécanismes d'entraînement classiques à avance mécanique programmée, le mécanisme d'entraînement 1 comprend un deuxième moyen d'engrenage 15, permettant de transformer le mouvement de rotation de l'arbre de transmission d'entrée 2 en un mouvement d'avance de l'arbre de transmission de sortie 3. Ce deuxième moyen d'engrenage 15 peut par exemple comprendre une première roue d'entraînement 16 couplée à l'arbre d'entrée 2 et permettant d'engrener une deuxième roue d'entraînement 17 en liaison pivot avec le bâti et solidaire d'un organe d'entraînement 18 couplé à l'arbre de transmission de sortie 3 par l'intermédiaire d'une liaison hélicoïdale, permettant de transformer le mouvement de rotation de l'organe d'entraînement 18 relativement à l'arbre de transmission de sortie 3 en un mouvement de translation correspondant de l'arbre de transmission de sortie 3 le long de son axe A par rapport au bâti, de sorte que l'arbre de transmission de sortie 3 avance le long de l'axe A (dans la direction de la flèche Va) par rapport au bâti en fonction de la vitesse relative de rotation des organes de rotation et d'entraînement 13 et 18. En effet, la liaison hélicoïdale va transformer le mouvement de rotation relative entre l'organe d'entraînement 18 et l'arbre de transmission de sortie 3 en un mouvement de translation. Le choix judicieux des deux rapports de transmission u1 et u2, respectivement entre la deuxième roue d'entraînement 17 et la première roue d'entraînement 16 du deuxième moyen d'engrenage 15 et entre le premier organe de rotation 13 et la première roue d'entraînement 12 du premier moyen d'engrenage 11, permettra d'obtenir une avance de faible valeur (quelques centièmes de millimètres) tout en mettant en oeuvre une liaison hélicoïdale à pas relativement important et facile à réaliser (quelques millimètres).

En variante, les mouvements de rotation des organes de rotation 13 et d'entraînement 17 peuvent également être fournis par deux chaines cinématique parallèles, plus complexes que celles présentées ci-dessus, qui reçoivent le mouvement d'entrainement du même moteur ou couple moteur/réducteur, ou de deux moteurs différents.

Il a été expliqué précédemment que les copeaux qui se forment au cours du perçage d'un matériau peuvent être évacués plus facilement si ces derniers se fragmentent en même temps qu'ils se forment. On cherche classiquement à rendre cette fragmentation possible en imprimant à l'outil de perçage couplé à l'arbre de transmission de sortie 3 un mouvement d'avance oscillant, en superposant au mouvement d'avance généré par l'organe d'entraînement 18 via la liaison hélicoïdale avec l'arbre de sortie 3, un mouvement oscillant.

Les solutions proposées par la présente invention pour générer le mouvement d'avance oscillant peuvent être appliquées à tout dispositif d'usinage comprenant un mécanisme d'entraînement de l'arbre de transmission présentant une chaîne cinématique telle que décrite en référence à la figure 1, mais peuvent s'appliquer, de manière plus large, indépendamment du choix de la chaîne cinématique conçue pour transmettre les mouvements à l'arbre de transmission de sortie 3 et, en particulier, conçue pour transmettre les deux mouvements de rotation respectivement à l'organe de rotation 13 et à l'organe d'entraînement 18. Aussi, les solutions qui vont maintenant être décrites peuvent-elle être appliquées à toute chaîne cinématique mettant en oeuvre un arbre de transmission de sortie couplé à un organe de rotation apte à entraîner l'arbre en rotation autour de son axe à l'intérieur d'un bâti en le laissant libre en translation, le bâti logeant un mécanisme d'entraînement comprenant un organe d'entraînement couplé à l'arbre par une liaison hélicoïdale de sorte à provoquer l'avance automatique de l'arbre le long de son axe relativement au bâti sous l'effet de l'entraînement en rotation de l'arbre et ce, quelle que soit la manière dont est réalisée la différence entre la vitesse de rotation ω1 de l'organe d'entraînement et la vitesse de rotation ω2 de l'organe de rotation.

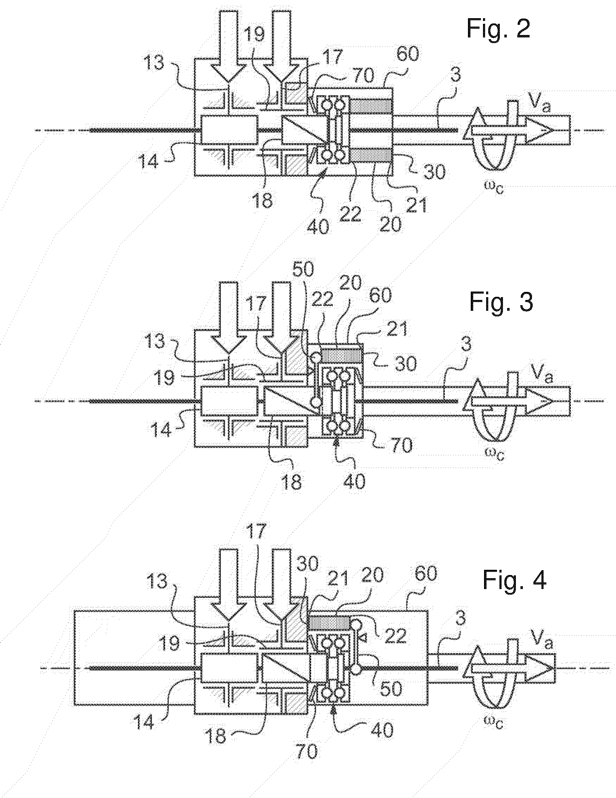

En référence à la figure 2, est décrit un mode de réalisation présentant une configuration basée sur une architecture de machine où l'organe d'entraînement 18 formant l'élément écrou de la liaison hélicoïdale est positionné dans la partie avant de la machine. Autrement dit, selon cette configuration, l'organe d'entraînement 18 est positionné le long de l'arbre de transmission de sortie 3 entre l'extrémité de couplage de l'arbre de transmission avec l'outil coupant et l'organe de rotation 13. Dans cette configuration particulière, comme illustré à la figure2, on prévoit de positionner l'actionneur 20 dans la partie avant 60 de la machine encore appelé nez de la machine, à l'avant de l'organe d'entraînement 18. Ainsi, l'actionneur 20 se trouve être positionné dans le nez de la machine, entre l'extrémité de couplage de l'arbre de transmission avec l'outil coupant et l'organe d'entraînement 18. Un tel positionnement de l'actionneur est particulièrement avantageux en termes d'encombrement et permet ainsi d'améliorer la compacité de la machine.

L'actionneur électromécanique 20 est en appui par une de ses extrémités 21 sur une butée annulaire d'appui axial 30 fixée au bâti, au niveau du nez 60 de la machine, du côté de l'extrémité de couplage de l'arbre de transmission avec l'outil coupant, afin de laisser l'actionneur 20 en repère fixe, de la même manière qu'expliqué précédemment en référence à la figure 1, et son extrémité libre 22, située à l'opposé de son extrémité 21 du côté du deuxième organe d'engrenage 17, est couplée à l'organe d'entraînement 18 par l'intermédiaire de la butée à double effet 40, pour le faire osciller en translation le long de l'axe A au travers de la liaison glissière 19.

Dans cette configuration, l'actionneur électromécanique 20 est donc agencé de manière à générer un mouvement de déplacement axial de l'organe d'entraînement 18 dans une direction axiale opposée à la direction du mouvement d'avance de l'outil (symbolisée par la flèche Vₐ sur les figures), depuis une position axiale nominale par rapport au bâti, tandis qu'un ressort de précharge 70 sollicite l'organe d'entraînement 18 dans une direction axiale correspondant à la direction du mouvement d'avance. Ainsi, l'actionneur 20 « pousse » ici en direction opposée au mouvement d'avance de l'outil. Le ressort de précharge 70 doit alors être suffisamment raide afin de pouvoir « ramener » l'outil dans la matière, sans générer de phénomènes nuisibles (tels que des instabilités, par exemple).

Le mode de réalisation de la figure 2 est plus particulièrement adapté à un mode d'assistance vibratoire consistant à imposer des oscillations de forme autre que sinusoïdales et, plus précisément, des oscillations en dents de scie. En effet, dans cette configuration, l'actionneur 20 utilise toute sa puissance pour entraîner l'organe d'entraînement 18 dans une direction opposée au mouvement d'avance de l'outil et ainsi générer une course de recul de l'outil qui est beaucoup plus rapide que le retour de l'outil dans la matière assuré par le ressort de précharge 70. De cette manière, la pente de la trajectoire sur la course active de l'outil, correspondant à la phase de formation du copeau lorsque l'outil est ramené dans la matière, sera plus faible que pour un mode d'assistance vibratoire où les oscillations sont de forme sinusoïdale, diminuant ainsi les efforts de coupe et l'usure de l'outil. De plus, la fréquence d'oscillations optimale pour l'assistance vibratoire de type en dents de scie est plus faible que celle nécessaire dans le cas d'oscillations de forme sinusoïdale.

Le mode de réalisation illustré à la figure 3 est basé sur une même architecture de machine que celle décrite en référence à la figure 2 et concerne également un positionnement de l'actionneur 20 dans le nez 60 de la machine, à l'avant de l'organe d'entraînement 18. Cependant, le sens d'actionnement est inversé par rapport au sens d'actionnement de la figure 2 et l'actionnement intègre une amplification, de manière à augmenter l'amplitude du mouvement oscillatoire généré par l'actionneur 20.

Pour ce faire, l'actionneur 20 est toujours monté en repère fixe, lié au bâti de la machine, en étant en appui par une de ses extrémités 21 sur une butée annulaire d'appui axial 30 fixée au bâti, au niveau du nez 60 de la machine, du côté de l'extrémité de couplage de l'arbre de transmission avec l'outil coupant, et le mouvement de déplacement axial généré par l'actionneur 20 est transmis à l'organe d'entraînement 18 par l'intermédiaire d'un bras de levier 50 monté à pivotement entre le deuxième organe d'engrenage 17 et l'extrémité libre 22 de l'actionneur 20, située sensiblement au droit du deuxième organe d'engrenage 17 à l'opposé de la première extrémité 21. De la sorte, l'actionneur permet de générer un mouvement de déplacement axial de l'organe d'entraînement 18 dans une direction axiale correspondant à la direction du mouvement d'avance de l'outil depuis une position axiale nominale par rapport au bâti, tandis que le ressort de précharge 70 sollicite l'organe d'entraînement 18 dans une direction axiale opposée à la direction du mouvement d'avance. Pour ce faire, le ressort de précharge 70 est agencé dans le nez de la machine à l'opposé de l'organe d'entraînement 18 par rapport à la butée à double effet 40 montée solidaire à l'avant de l'organe d'entraînement 18 et est précontraint contre la butée à double effet 40 pour générer la force de retour permettant de sortir l'outil de la matière.

Le mode de réalisation de la figure 3 avec l'actionnement logé dans le nez de machine présente ainsi toujours un impact positif en termes d'encombrement et, s'il n'est pas particulièrement optimisé pour la mise en œuvre d'une assistance vibratoire avec des oscillations en dents de scie contrairement au mode de réalisation de la figure2, il peut par contre procurer avantageusement des amplitudes d'oscillations multipliées par le facteur d'amplification permis par le moyen d'amplification mécanique intercalé entre l'actionneur et l'organe d'entraînement 18.

Le mode de réalisation de la figure 4 est toujours basée sur l'architecture de machine décrite aux figures 2 et3, avec l'organe d'entraînement 18 positionné à l'avant de la machine par rapport à l'organe de rotation 13 et concerne encore un positionnement de l'actionneur 20 dans le nez 60 de la machine, à l'avant de l'organe d'entraînement 18. Ce mode de réalisation combine en outre les avantages liés à la disposition inversée de la direction d'actionnement (figure2) et à la mise en œuvre d'une amplification de l'amplitude du mouvement généré (figure3). Pour ce faire, l'actionneur 20 est monté en repère fixe, lié au bâti de la machine, en étant en appui par une de ses extrémités 21 sur une butée annulaire d'appui axial 30 fixée au bâti, au niveau du nez 60 de la machine, du côté de l'organe d'entraînement 18, et s'étend dans le nez de la machine sensiblement au droit de la butée à double effet 40 montée à l'avant de l'organe d'entraînement 18. Selon l'exemple de réalisation, un bras de levier 50 est monté à pivotement entre l'extrémité libre 22 de l'actionneur 20 et la bague fixe de la butée à double effet 40 montée mobile en translation sur l'arbre de transmission de sortie 3. Ainsi, l'actionneur 20 permet de générer un mouvement de déplacement axial de l'organe d'entraînement 18 dans une direction opposée à la direction du mouvement d'avance de l'outil et ce mouvement de déplacement axial généré par l'actionneur 20 est transmis à l'organe d'entraînement 18 par l'intermédiaire du bras de levier 50. De la sorte, l'actionneur est apte à « pousser » l'organe d'entraînement 18 en direction opposée à la direction du mouvement d'avance de l'outil avec une amplitude de mouvement amplifié par le bras de levier 50 et le ressort de précharge 70 sollicite l'organe d'entraînement 18 en direction inverse. Pour ce faire, le ressort de précharge 70 est agencé dans le nez de la machine du côté de l'organe d'entraînement 18 et est précontraint contre la bague tournante de la butée à double effet 40 rapportée sur l'organe d'entraînement 18 pour générer la force permettant de ramener l'outil dans la matière.

Les différents modes de réalisation de l'invention tels qu'ils viennent d'être décrits pour combiner le mouvement d'avance de l'arbre de transmission de sortie avec un mouvement oscillatoire le long de son axe, pourront être facilement adaptés à tout type d'unité d'usinage, étant donné que des opérations autres que le perçage restent réalisables et dans la mesure où les moyens mis en œuvre pour générer les oscillations axiales interviennent uniquement dans la partie de guidage de l'arbre, indépendamment de la chaîne cinématique qui fournit les deux mouvements de rotation respectivement à l'organe de rotation 13 pour l'entraînement en rotation de l'arbre autour de son axe et à l'organe d'entraînement 18 pour l'entraînement en translation de l'arbre le long de son axe. Ainsi, la solution proposée pourra par exemple être utilisée dans la conception d'un moyen d'usinage de type électrobroche, procurant ainsi l'avantage de l'intégration du mouvement d'avance dans ledit moyen d'usinage et de l'assistance vibratoire. De façon générale, l'invention est applicable à tout domaine industriel dans lequel un outil ou un outillage doit être animé par un mouvement de rotation (de vitesse constante ou pas), associé à un mouvement d'avance (de vitesse constante ou pas) et à un mouvement oscillant (vibrations de fréquence, amplitude et forme d'onde variables), tous les paramètres de ces mouvements pouvant être indépendamment réglés, hors ou pendant le processus.

Un tel positionnement de l'actionneur est particulièrement avantageux en termes d'encombrement et permet ainsi d'améliorer la compacité de la machine.

L'actionneur électromécanique 20 est en appui par une de ses extrémités 21 sur une butée annulaire d'appui axial 30 fixée au bâti, au niveau du nez 60 de la machine, du côté de l'extrémité de couplage de l'arbre de transmission avec l'outil coupant, afin de laisser l'actionneur 20 en repère fixe, de la même manière qu'expliqué précédemment en référence à la figure 1, et son extrémité libre 22, située à l'opposé de son extrémité 21 du côté du deuxième roue d'entraînement 17, est couplée à l'organe d'entraînement 18 par l'intermédiaire de la butée à double effet 40, pour le faire osciller en translation le long de l'axe A au travers de la liaison glissière 19.

Dans cette configuration, l'actionneur électromécanique 20 est donc agencé de manière à générer un mouvement de déplacement axial de l'organe d'entraînement 18 dans une direction axiale opposée à la direction du mouvement d'avance de l'outil (symbolisée par la flèche Vₐ sur les figures), depuis une position axiale nominale par rapport au bâti, tandis qu'un ressort de précharge 70 sollicite l'organe d'entraînement 18 dans une direction axiale correspondant à la direction du mouvement d'avance. Ainsi, le sens d'actionnement selon le mode de réalisation de la figure 4 est en sens inverse par rapport au sens d'actionnement selon le mode de réalisation des figures 2 et 3, où l'actionneur 20 « pousse » en direction du mouvement d'avance de l'outil. Par contraste, l'actionneur 20 « pousse » ici en direction opposée au mouvement d'avance de l'outil. Le ressort de précharge 70 doit alors être suffisamment raide afin de pouvoir « ramener » l'outil dans la matière, sans générer de phénomènes nuisibles (tels que des instabilités, par exemple).

Le mode de réalisation de la figure 4 est plus particulièrement adapté à un mode d'assistance vibratoire consistant à imposer des oscillations de forme autre que sinusoïdales et, plus précisément, des oscillations en dents de scie. En effet, dans cette configuration, l'actionneur 20 utilise toute sa puissance pour entraîner l'organe d'entraînement 18 dans une direction opposée au mouvement d'avance de l'outil et ainsi générer une course de recul de l'outil qui est beaucoup plus rapide que le retour de l'outil dans la matière assuré par le ressort de précharge 70. De cette manière, la pente de la trajectoire sur la course active de l'outil, correspondant à la phase de formation du copeau lorsque l'outil est ramené dans la matière, sera plus faible que pour un mode d'assistance vibratoire où les oscillations sont de forme sinusoïdale, diminuant ainsi les efforts de coupe et l'usure de l'outil. De plus, la fréquence d'oscillations optimale pour l'assistance vibratoire de type en dents de scie est plus faible que celle nécessaire dans le cas d'oscillations de forme sinusoïdale.

Le mode de réalisation illustré à la figure 5 est basé sur une même architecture de machine que celle décrite en référence à la figure 4 et concerne également un positionnement de l'actionneur 20 dans le nez 60 de la machine, à l'avant de l'organe d'entraînement 18. Cependant, le sens d'actionnement est inversé par rapport au sens d'actionnement de la figure 4 et l'actionnement intègre une amplification, de manière à augmenter l'amplitude du mouvement oscillatoire généré par l'actionneur 20, sur le principe du mode de réalisation décrit en référence à la figure 3.

Pour ce faire, l'actionneur 20 est toujours monté en repère fixe, lié au bâti de la machine, en étant en appui par une de ses extrémités 21 sur une butée annulaire d'appui axial 30 fixée au bâti, au niveau du nez 60 de la machine, du côté de l'extrémité de couplage de l'arbre de transmission avec l'outil coupant, et le mouvement de déplacement axial généré par l'actionneur 20 est transmis à l'organe d'entraînement 18 par l'intermédiaire d'un bras de levier 50 (suivant l'exemple de la figure 3) monté à pivotement entre le deuxième roue d'entraînement 17 et l'extrémité libre 22 de l'actionneur 20, située sensiblement au droit du deuxième roue d'entraînement 17 à l'opposé de la première extrémité 21. De la sorte, l'actionneur permet de générer un mouvement de déplacement axial de l'organe d'entraînement 18 dans une direction axiale correspondant à la direction du mouvement d'avance de l'outil depuis une position axiale nominale par rapport au bâti, tandis que le ressort de précharge 70 sollicite l'organe d'entraînement 18 dans une direction axiale opposée à la direction du mouvement d'avance. Pour ce faire, le ressort de précharge 70 est agencé dans le nez de la machine à l'opposé de l'organe d'entraînement 18 par rapport à la butée à double effet 40 montée solidaire à l'avant de l'organe d'entraînement 18 et est précontraint contre la butée à double effet 40 pour générer la force de retour permettant de sortir l'outil de la matière.

Le mode de réalisation de la figure 5 avec l'actionnement logé dans le nez de machine présente ainsi toujours un impact positif en termes d'encombrement et, s'il n'est pas particulièrement optimisé pour la mise en oeuvre d'une assistance vibratoire avec des oscillations en dents de scie contrairement au mode de réalisation de la figure 4, il peut par contre procurer avantageusement des amplitudes d'oscillations multipliées par le facteur d'amplification permis par le moyen d'amplification mécanique intercalé entre l'actionneur et l'organe d'entraînement 18.

Le mode de réalisation de la figure 6 est toujours basée sur l'architecture de machine décrite aux figures 4 et 5, avec l'organe d'entraînement 18 positionné à l'avant de la machine par rapport à l'organe de rotation 13 et concerne encore un positionnement de l'actionneur 20 dans le nez 60 de la machine, à l'avant de l'organe d'entraînement 18. Ce mode de réalisation combine en outre les avantages liés à la disposition inversée de la direction d'actionnement (figure 4) et à la mise en œuvre d'une amplification de l'amplitude du mouvement généré (figure 5). Pour ce faire, l'actionneur 20 est monté en repère fixe, lié au bâti de la machine, en étant en appui par une de ses extrémités 21 sur une butée annulaire d'appui axial 30 fixée au bâti, au niveau du nez 60 de la machine, du côté de l'organe d'entraînement 18, et s'étend dans le nez de la machine sensiblement au droit de la butée à double effet 40 montée à l'avant de l'organe d'entraînement 18. Selon l'exemple de réalisation, un bras de levier 50 est monté à pivotement entre l'extrémité libre 22 de l'actionneur 20 et la bague fixe de la butée à double effet 40 montée mobile en translation sur l'arbre de transmission de sortie 3. Ainsi, l'actionneur 20 permet de générer un mouvement de déplacement axial de l'organe d'entraînement 18 dans une direction opposée à la direction du mouvement d'avance de l'outil et ce mouvement de déplacement axial généré par l'actionneur 20 est transmis à l'organe d'entraînement 18 par l'intermédiaire du bras de levier 50. De la sorte, l'actionneur est apte à « pousser » l'organe d'entraînement 18 en direction opposée à la direction du mouvement d'avance de l'outil avec une amplitude de mouvement amplifié par le bras de levier 50 et le ressort de précharge 70 sollicite l'organe d'entraînement 18 en direction inverse. Pour ce faire, le ressort de précharge 70 est agencé dans le nez de la machine du côté de l'organe d'entraînement 18 et est précontraint contre la bague tournante de la butée à double effet 40 rapportée sur l'organe d'entraînement 18 pour générer la force permettant de ramener l'outil dans la matière.

Les différents modes de réalisation de l'invention tels qu'ils viennent d'être décrits pour combiner le mouvement d'avance de l'arbre de transmission de sortie avec un mouvement oscillatoire le long de son axe, pourront être facilement adaptés à tout type d'unité d'usinage, étant donné que des opérations autres que le perçage restent réalisables et dans la mesure où les moyens mis en œuvre pour générer les oscillations axiales interviennent uniquement dans la partie de guidage de l'arbre, indépendamment de la chaîne cinématique qui fournit les deux mouvements de rotation respectivement à l'organe de rotation 13 pour l'entraînement en rotation de l'arbre autour de son axe et à l'organe d'entraînement 18 pour l'entraînement en translation de l'arbre le long de son axe. Ainsi, la solution proposée pourra par exemple être utilisée dans la conception d'un moyen d'usinage de type électrobroche, procurant ainsi l'avantage de l'intégration du mouvement d'avance dans ledit moyen d'usinage et de l'assistance vibratoire. De façon générale, l'invention est applicable à tout domaine industriel dans lequel un outil ou un outillage doit être animé par un mouvement de rotation (de vitesse constante ou pas), associé à un mouvement d'avance (de vitesse constante ou pas) et à un mouvement oscillant (vibrations de fréquence, amplitude et forme d'onde variables), tous les paramètres de ces mouvements pouvant être indépendamment réglés, hors ou pendant le processus.

## Revendications

1. Dispositif d'usinage comprenant un bâti, un arbre de transmission (3) s'étendant le long d'un axe (A) et apte à être couplé à un outil coupant, et un mécanisme d'entraînement (1) de l'arbre de transmission, ledit mécanisme comprenant un organe de rotation (13) couplé à l'arbre de transmission (3) et apte à entraîner en rotation l'arbre de transmission autour de son axe par rapport au bâti, un organe d'entraînement (18) en liaison hélicoïdale avec l'arbre de transmission (3) et apte à entraîner en translation l'arbre de transmission (3) le long de son axe (A) par rapport au bâti selon un mouvement d'avance, en fonction de la vitesse relative de rotation desdits organes de rotation (13) et d'entraînement (18), et des moyens de génération d'oscillations axiales aptes à générer un mouvement d'avance oscillant de l'arbre de transmission le long de son axe, ledit organe d'entraînement (18) étant monté mobile en translation par rapport audit bâti le long de l'axe (A) et disposé entre une extrémité de couplage de l'arbre de transmission (3) avec ledit outil coupant et ledit organe de rotation (13), **caractérisé en ce que** lesdits moyens de génération d'oscillations axiales comprennent un actionneur électromécanique (20) monté en repère fixe, lié audit bâti, à l'avant dudit organe d'entraînement (18) avec lequel ledit actionneur électromécanique (20) est apte à être couplé pour le faire osciller en translation, de manière à superposer une composante d'oscillation axiale audit mouvement d'avance.

2. Dispositif selon la revendication 1, **caractérisé en ce que** ledit actionneur électromécanique (20) est agencé de manière à générer un mouvement de déplacement axial dudit organe d'entraînement (18) dans une direction axiale opposée à la direction du mouvement d'avance, tandis qu'un ressort de précharge sollicite ledit organe d'entraînement (18) dans une direction axiale correspondant à la direction du mouvement d'avance.

3. Dispositif selon la revendication 1, **caractérisé en ce que** ledit actionneur électromécanique (20) est agencé de manière à générer un mouvement de déplacement axial dudit organe d'entraînement (18) dans une direction axiale correspondant à la direction dudit mouvement d'avance, tandis qu'un ressort de précharge sollicite ledit organe d'entraînement (18) dans une direction axiale opposée à la direction du mouvement d'avance.

4. Dispositif selon l'une quelconque des revendications 2 ou 3, **caractérisé en ce que** ledit mouvement de déplacement axial est transmis audit organe d'entraînement (18) par l'intermédiaire d'un moyen d'amplification mécanique apte à amplifier l'amplitude du mouvement généré par ledit actionneur électromécanique (20).

5. Dispositif selon la revendication 4, **caractérisé en ce que** ledit moyen d'amplification mécanique comprend un bras de levier s'étendant entre une extrémité libre dudit actionneur électromécanique (20) et ledit organe d'entraînement (18).

6. Dispositif selon l'une quelconque des revendications précédentes, **caractérisé en ce qu'**il comprend un moyen d'accouplement avec ledit organe d'entraînement (18) de type butée à double effet solidaire dudit organe d'entraînement.

7. Dispositif selon l'une quelconque des revendications précédentes, **caractérisé en ce que** ledit actionneur électromécanique (20) est en appui par une de ses extrémités (21) sur une butée annulaire d'appui axial (30) fixée audit bâti.

8. Dispositif selon la revendication 7, **caractérisé en ce que** ladite butée annulaire d'appui axial (30) comprend des moyens élastiques d'amortissement par l'intermédiaire desquels ladite extrémité dudit actionneur électromécanique est en appui sur ladite butée annulaire d'appui axial.

9. Dispositif selon l'une quelconque des revendications précédentes, **caractérisé en ce que** ledit organe d'entraînement (18) est en liaison glissière (19) dans la direction de l'axe (A) avec une roue d'entraînement (17) en rotation dudit organe d'entraînement (18), ladite roue d'entraînement (17) recevant un mouvement de rotation et étant en liaison pivot par rapport audit bâti.

10. Dispositif selon la revendication 9, **caractérisé en ce que** ladite liaison glissière (19) entre ledit organe d'entraînement (18) et ladite roue d'entraînement (17) dans la direction de l'axe (A) est réalisée par des moyens de guidage élastiques.

11. Dispositif selon l'une quelconque des revendications précédentes, **caractérisé en ce qu'**il comprend un pivot glissant entre ledit organe d'entraînement (18) et ledit bâti.

12. Dispositif selon l'une quelconque des revendications précédentes, **caractérisé en ce que** ledit actionneur électromécanique (20) est un actionneur piézoélectrique ou magnétostrictif ou électrostrictif.

## Patentansprüche

1. Bearbeitungsvorrichtung, die einen Rahmen, eine Übertragungswelle (3), die sich entlang einer Achse (A) erstreckt und mit einem Schneidwerkzeug gekoppelt werden kann, und einen Antriebsmechanismus (1) für die Übertragungswelle, wobei der Mechanismus ein Drehglied (13) umfasst, das mit der Übertragungswelle (3) gekoppelt ist und die Übertragungswelle in Bezug auf den Rahmen um deren Achse drehend antreiben kann, ein Antriebsglied (18), das mit der Übertragungswelle (3) in Schraubenverbindung steht und in Abhängigkeit von der relativen Drehgeschwindigkeit des Dreh- (13) und des Antriebsglieds (18) die Übertragungswelle (3) in Bezug auf den Rahmen entlang deren Achse (A) gemäß einer Vorschubbewegung translatorisch antreiben kann, und Mittel zum Erzeugen von axialen Schwingungen umfasst, die eine schwingende Vorschubbewegung der Übertragungswelle entlang deren Achse erzeugen können, wobei das Antriebsglied (18) in Bezug auf den Rahmen entlang der Achse (A) translationsbeweglich angebracht ist und zwischen einem Ende zur Kopplung der Übertragungswelle (3) mit dem Schneidwerkzeug, und dem Drehglied (13) angeordnet ist, **dadurch gekennzeichnet, dass** die Mittel zum Erzeugen von axialen Schwingungen einen elektromechanischen Aktor (20) umfassen, der als mit dem Rahmen verbundener fester Bezugspunkt vor dem Antriebsglied (18) angebracht ist, mit dem der elektromechanische Aktor (20) gekoppelt werden kann, um diesen translatorisch zum Schwingen zu bringen, um die Vorschubbewegung mit einer Komponente einer axialen Schwingung zu überlagern.

2. Vorrichtung nach Anspruch 1, **dadurch gekennzeichnet, dass** der elektromechanische Aktor (20) so eingerichtet ist, dass er eine axiale Verlagerungsbewegung des Antriebsglieds (18) in einer der Richtung der Vorschubbewegung entgegengesetzten axialen Richtung erzeugt, während eine Vorspannfeder das Antriebsglied (18) in eine der Richtung der Vorschubbewegung entsprechende axiale Richtung vorspannt.

3. Vorrichtung nach Anspruch 1, **dadurch gekennzeichnet, dass** der elektromechanische Aktor (20) so eingerichtet ist, dass er eine axiale Verlagerungsbewegung des Antriebsglieds (18) in eine der Richtung der Vorschubbewegung entsprechende axiale Richtung erzeugt, während eine Vorspannfeder das Antriebsglied (18) in eine der Richtung der Vorschubbewegung entgegengesetzte axiale Richtung vorspannt.

4. Vorrichtung nach einem der Ansprüche 2 oder 3, **dadurch gekennzeichnet, dass** die axiale Verlagerungsbewegung mittels eines mechanischen Verstärkungsmittels, das die Amplitude der von dem elektromechanischen Aktor (20) erzeugten Bewegung verstärken kann, auf das Antriebsglied (18) übertragen wird.

5. Vorrichtung nach Anspruch 4, **dadurch gekennzeichnet, dass** das mechanische Verstärkungsmittel einen Hebelarm umfasst, der sich zwischen einem freien Ende des elektromechanischen Aktors (20) und dem Antriebsglied (18) erstreckt.

6. Vorrichtung nach einem der vorstehenden Ansprüche, **dadurch gekennzeichnet, dass** sie ein Mittel zum Koppeln mit dem Antriebsglied (18) vom Typ eines fest mit dem Antriebsglied verbundenen doppeltwirkenden Anschlags umfasst.

7. Vorrichtung nach einem der vorstehenden Ansprüche, **dadurch gekennzeichnet, dass** der elektromechanische Aktor (20) mit einem seiner Enden (21) an einem am Rahmen befestigten ringförmigen axialen Auflageanschlag (30) aufliegt.

8. Vorrichtung nach Anspruch 7, **dadurch gekennzeichnet, dass** der ringförmige axiale Auflageanschlag (30) elastische Dämpfungsmittel umfasst, mittels deren das Ende des elektromechanischen Aktors an dem ringförmigen axialen Auflageanschlag aufliegt.

9. Vorrichtung nach einem der vorstehenden Ansprüche, **dadurch gekennzeichnet, dass** das Antriebsglied (18) in der Richtung der Achse (A) mit einem Antriebsrad (17), das mit dem Antriebsglied (18) dreht, in Gleitverbindung (19) steht, wobei das Antriebsrad (17) eine Drehbewegung aufnimmt und in Bezug auf den Rahmen in Schwenkverbindung steht.

10. Vorrichtung nach Anspruch 9, **dadurch gekennzeichnet, dass** die Gleitverbindung (19) zwischen dem Antriebsglied (18) und dem Antriebsrad (17) in der Richtung der Achse (A) von elastischen Führungsmitteln hergestellt wird.

11. Vorrichtung nach einem der vorstehenden Ansprüche, **dadurch gekennzeichnet, dass** sie einen Gleitzapfen zwischen dem Antriebsglied (18) und dem Rahmen umfasst.

12. Vorrichtung nach einem der vorstehenden Ansprüche, **dadurch gekennzeichnet, dass** es sich bei dem elektromechanischen Aktor (20) um einen piezoelektrischen oder magnetostriktiven oder elektrostriktiven Aktor handelt.

## Claims

1. Machining device comprising a framework, a transmission shaft (3) that extends along an axis (A) and is able to be coupled to a cutting tool, and a drive mechanism (1) for driving the transmission shaft, said mechanism comprising a rotation member (13) that is coupled to the transmission shaft (3) and is able to drive the transmission shaft rotationally about its axis with respect to the framework, a drive member (18) that is in helical connection with the transmission shaft (3) and is able to drive the transmission shaft (3) translationally along its axis (A) in a feed movement with respect to the framework, depending on the relative rotational speed of said rotation member (13) and drive member (18), and means for generating axial oscillations that are able to generate an oscillating feed movement of the transmission shaft along its axis, said drive member (18) being mounted so as to be able to move translationally along the axis (A) with respect to said framework and positioned between an end for coupling the transmission shaft (3) to said cutting tool and said rotation member (13), **characterized in that** said means for generating axial oscillations comprise an electromechanical actuator (20) mounted in a fixed location, associated with said framework, in front of said drive member (18) to which said electromechanical actuator (20) is able to be coupled in order to make it oscillate translationally, so as to superpose an axial oscillation component on said feed movement.

2. Device according to claim 1, **characterized in that** said electromechanical actuator (20) is designed so as to generate an axial displacement movement of said drive member (18) in an axial direction opposite to the direction of the feed movement, while a preloading spring urges said drive member (18) in an axial direction corresponding to the direction of the feed movement.

3. Device according to claim 1, **characterized in that** said electromechanical actuator (20) is designed so as to generate an axial displacement movement of said drive member (18) in an axial direction corresponding to the direction of said feed movement, while a preloading spring urges said drive member (18) in an axial direction opposite to the direction of the feed movement.

4. Device according to either one of claims 2 and 3, **characterized in that** said axial displacement movement is transmitted to said drive member (18) by way of a mechanical amplification means that is able to amplify the amplitude of the movement generated by said electromechanical actuator (20) .

5. Device according to claim 4, **characterized in that** said mechanical amplification means comprises a lever arm extending between a free end of said electromechanical actuator (20) and said drive member (18).

6. Device according to any one of the preceding claims, **characterized in that** it comprises a means for coupling to said drive member (18) of the double thrust bearing type secured to said drive member.

7. Device according to any of the preceding claims, **characterized in that** said electromechanical actuator (20) butts with one of its ends (21) against an axial annular bearing (30) fixed to said framework.

8. Device according to claim 7, **characterized in that** said axial annular bearing (30) comprises elastic damping means by way of which said end of said electromechanical actuator butts against said axial annular bearing.

9. Device according to any one of the preceding claims, **characterized in that** said drive member (18) is in a sliding connection (19) in the direction of the axis (A) with a drive sprocket (17) for driving said drive member (18) in rotation, said drive sprocket (17) receiving a rotational movement and being in a pivoting connection with respect to said framework.

10. Device according to claim 9, **characterized in that** said sliding connection (19) between said drive member (18) and said drive sprocket (17) in the direction of the axis (A) is realized by elastic guide means.

11. Device according to any one of the preceding claims, **characterized in that** it comprises a sliding pivot between said drive member (18) and said framework.

12. Device according to any one of the preceding claims, **characterized in that** said electromechanical actuator (20) is a piezoelectric or magnetostrictive or electrostrictive actuator.
